# EUROPEAN PATENT APPLICATION

(11) **EP 4 813 742 A1**
(43) Date of publication of application: **30.09.2026**
(21) Application number: 24892683.4
(22) Date of filing: 29.04.2024
(51) Int. Cl.: B60N 2/853

(54) **ANGLE ADJUSTMENT SYSTEM**

(30) Priority: 23.11.2023 CN 202323179293 U
(71) Applicant: Man Wah Furniture Manufacturing (Shenzhen) Co., Ltd., Shenzhen, Guangdong 518100 (CN)
(72) Inventor: CHEN, Weiming, Guangdong 516083 (CN)
(74) Representative: Cabinet Chaillot
(86) International application number: PCT/CN2024/090609
(87) International publication number: WO 2025/107517

(57) **Abstract**

This application relates to an angle adjustment system (10) comprising a headrest section (100) with a headrest rear panel (110), headrest side plates (120), and a first bracket (130) connecting the headrest rear panel (110) and headrest side plates (120); a backrest section (200) with a backrest rear panel (210), backrest side plates (220), and a second bracket (230) connecting the backrest rear panel (210) and backrest side plates (220); and an adjustment device (300) having a first adjustment part (320) connected to the first bracket (130) and a second adjustment part (330) connected to the second bracket (230), the two parts being capable of moving relative to each other. When the first adjustment part (320) moves relative to the second adjustment part (330), the first bracket (130) pivots relative to the second bracket (230). This system is used to adjust the pitch angle of a seat headrest and has high structural strength and few components.

## Description

### Technical Field

The present application also relates to an angle adjustment system, particularly for adjusting the angle of a seat headrest.

### Background Technology

In modern seat design, to ensure comfort, the pitch angle of components such as the headrest must be adjusted to accommodate individual user differences and different usage states (for example, resting or working states). Thus, an angle adjustment system is required for the seat.

The angle adjustment system can be equipped with assistive devices such as motors to achieve effortless angle adjustment. These assistive devices have a specific size, making their arrangement in the seat crucial to meeting aesthetic demands (for example, integrating the motor into the seat), comfort requirements (for example, avoiding user discomfort during seating), and maximizing adjustment angles.

On the other hand, in addition to these considerations, lightweight construction, durability, and economic feasibility are crucial factors in product design, although these often conflict with one another.

For example, adding an angle adjustment system for comfort inevitably increases the product's weight and cost. To ensure that the angle adjustment system can adjust seat components, such as the pitch angle of the headrest, it is often required to minimize the number of components, thereby reducing its weight and cost.

For example, conventional wooden seats typically offer high strength but require complex processes such as plywood and wood beam cutting, leading to high labor costs and long production cycles.

### Summary of the Invention

The purpose of this application is to provide an angle adjustment system that can adjust the pitch angle of a headrest while maintaining relatively high structural strength and fewer components.

The angle adjustment system, according to the present application comprises in particular: A headrest section, comprising a headrest rear panel, headrest side panels connected to the ends of the rear panel, and a first bracket connecting the rear panel and the side panels. A backrest section, comprising a backrest rear panel, backrest side panels connected to the ends of the backrest rear panel, and a second bracket connecting the backrest rear panel and the side panels. Moreover, the adjustment device includes a first adjustment part and a second adjustment part, where the first adjustment part can move relative to the second adjustment part. The first adjustment part is connected to the first bracket, and the second adjustment part is connected to the second bracket. The first bracket and the second bracket are connected via a pivot shaft. When the first adjustment part moves relative to the second adjustment part, the first bracket pivots relative to the second bracket.

Here, on one hand, the first bracket serves to connect the headrest rear panel and the headrest side plates, while the second bracket connects the backrest rear panel and the backrest side plates. On the other hand, the first bracket and second bracket are respectively connected to the first and second adjustment parts of the adjustment device as follower components. This structure reduces the number of components in the angle adjustment system while ensuring angle adjustment functionality and structural strength, thereby simplifying production and manufacturing processes.

Preferably, the headrest rear panel, headrest side plates, backrest rear panel, and backrest side plates are plastic parts. In particular, the headrest rear panel, headrest side plates, backrest rear panel, and backrest side plates are components that may be selected from wood-molded parts, injection-molded parts, blow-molded parts, or extruded-molded parts. Plastic parts such as wood-molded parts, injection-molded parts, blow-molded parts, and extruded-molded parts can be molded in a single step using molds, facilitating automated assembly, significantly reducing labor costs, and meeting lightweight design requirements.

More preferably, the headrest rear panel and backrest rear panel may be made of wood-molded parts, while the headrest side plates and backrest side plates may be made of injection-molded parts. Wood-molded parts reduce costs, while injection-molded parts are better suited for load-bearing.

In a preferred embodiment, the first bracket may be constructed with a first side part and a second side part arranged at an angle to each other. The first bracket connects to the headrest rear panel via the first side part and connects to the headrest side plates via the second side part. This configuration of the first bracket is easy to manufacture and effectively connects the headrest rear panel and headrest side plates at a fixed angle, ensuring overall structural stability. This is particularly advantageous when constructed from wood molded parts, injection molded parts, blow molded parts, and/or extruded molded parts.

Alternatively or additionally, the second bracket may be similarly constructed with similar technical effects. Specifically, the second bracket may include a fourth side part and a fifth side part arranged at an angle to each other. The fourth side part connects to the backrest rear panel, and the fifth side part connects to the backrest side plates.

Preferably, the headrest rear panel has a substantially flat body and a top portion extending perpendicularly from the body. The first bracket includes a third side part arranged at an angle to the first side part, and the first bracket connects to the body of the headrest rear panel via the third side part. Through the third side part, the first bracket transmits the adjustment force applied by the adjustment device to the top portion of the headrest rear panel. This reduces shear forces at the connection points between the first bracket, headrest rear panel, and headrest side plates, thereby minimizing the risk of connection damage. This is particularly advantageous for the protection of the joints of the plastic parts.

In a preferred embodiment, the headrest rear panel features first accommodating sections at both ends, while the headrest side plates have protrusions extending perpendicular to the plane of the side plates. By inserting the protrusions into the first accommodating sections, the headrest side plates are fitted to both ends of the headrest rear panel. These interlocking headrests rear panels and side plates provide preliminary positioning before connecting to the first bracket and offer additional connection strength. The backrest rear panel and backrest side plates can be similarly configured.

Preferably, the protrusions include a recessed portion containing nuts, allowing the first bracket and/or second bracket to be bolted securely to the nuts within this recessed portion.

Alternatively, the protrusions can be configured as cross ribs.

In a preferred embodiment, the adjustment device further includes a driver capable of driving the first adjustment part to move relative to the second adjustment part. Therefore, this driver, as an assisting mechanism, enables users to adjust the headrest angle effortlessly.

Preferably, a linear actuator may be selected as the adjustment device, enabling precise linear movement between the adjustment parts. The first adjustment part is pivotally connected to the first bracket via a first shaft, and the second adjustment part is pivotally connected to the second bracket via a second shaft, both connections supported by bearings.

Preferably, the first shaft is fixedly connected to the first bracket and pivotally connected to the first adjustment part via a bearing. The second shaft is fixedly connected to the second bracket and pivotally connected to the second adjustment part via another bearing.

Fixed connections may include integrally molded configurations or subsequent fastening methods such as welding, snap-fit connections, or threaded connections.

Alternatively, the first shaft may be fixedly connected to the first adjustment part and pivotally connected to the first bracket via a bearing, while the second shaft may be fixedly connected to the second adjustment part and pivotally connected to the second bracket via another bearing.

Preferably, the headrest side plates include second accommodating sections that house and support the first shaft. By embedding the first shaft in the second accommodating sections of the headrest side plates, the design effectively distributes adjustment forces, reducing stress at the connections between the first bracket, rear panels, and side plates, thereby enhancing durability and preventing damage. This is particularly advantageous for the protection of the joints of the plastic parts. At the same time, in this case, selecting high-strength injection molded parts or extruded molded parts as the material for the headrest side plates is particularly advantageous.

Alternatively or additionally, the backrest side plates can also be provided with second accommodating sections, which house and support the second shaft.

In a preferred embodiment, a limiting mechanism can be installed between the first bracket and the second bracket to restrict the range of angle adjustment. Specifically, one of the first brackets and the second bracket are provided with a guiding groove, and both ends of the guiding groove are provided with limiting parts. The other of the first bracket and the second bracket is provided with sliding members that cooperate with the guiding groove. When the first bracket pivots relative to the second bracket, the sliding members slide along the guiding groove and stop sliding upon contacting the limiting parts.

In a preferred embodiment, the headrest rear panel is connected to two headrest side plates via two first brackets at both ends, and the backrest rear panel is connected to two backrest side plates via two second brackets at both ends. The adjustment device is arranged at one end, and tensioning components are placed at the other end, connected to the first bracket and second bracket.

The unilateral arrangement of the adjustment device further reduces the need for components such as extending members. To prevent uneven load-bearing structures of the headrest from collapsing or deforming on one side during use, tensioning components such as springs can be arranged at the end without the adjustment device to provide tension. This is particularly beneficial for seating comfort.

### Illustration of the Attached Drawing

For a better understanding of the above and other purposes, features, advantages and functions of the present application, reference may be made to the preferred embodiments illustrated in the accompanying drawings. The same reference symbols in the accompanying drawings refer to the same components. Technicians in this field should understand that the accompanying drawings are intended to illustrate the preferred embodiments of the present application, do not limit the scope of the application, and that the various components in the drawings are not drawn to scale.
Figure 1 illustrates a three-dimensional view of the angle adjustment system of this application;
Figure 2 illustrates a three-dimensional view of the headrest rear panel of the angle adjustment system of this application;
Figure 3 illustrates a three-dimensional view of the headrest side plate of the angle adjustment system of this application;
Figure 4 illustrates a three-dimensional view of the backrest rear panel of the angle adjustment system of this application;
Figure 5 illustrates a three-dimensional view of the backrest side plate of the angle adjustment system of this application; and
Figure 6 illustrates a three-dimensional view of the angle adjustment device connected to the first bracket and the second bracket of the angle adjustment system of this application;

### Specific Implementations

Specific implementations of the present application will now be described in detail with reference to the accompanying drawings. The description here is only based on the preferred embodiment of the present application. Technicians in this field may think of other ways to implement the present application on the basis of the preferred embodiment, which also fall within the scope of the present application.

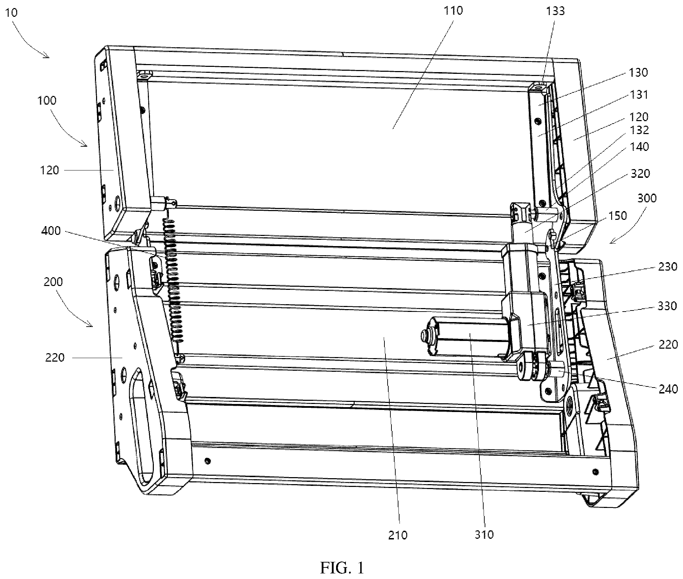

Figure 1 shows a three-dimensional view of the angle adjustment system 10 of this application, which includes a headrest section 100, a backrest section 200, and an adjustment device 300 for adjusting the angle between the headrest section 100 and the backrest section 200. The headrest section 100 comprises a headrest rear panel 110, headrest side plates 120 connected to the ends of the headrest rear panel 110, and a first bracket 130 connecting the headrest rear panel 110 and headrest side plates 120; the backrest section 200 comprises a backrest rear panel 210, backrest side plates 220 connected to the ends of the backrest rear panel 210, and a second bracket 230 connecting the backrest rear panel 210 and backrest side plates 220; the adjustment device 300 includes a first adjustment part 320 and a second adjustment part 330 that can move relative to each other. By connecting the first adjustment part 320 and the second adjustment part 330 to the first bracket 130 and the second bracket 230, respectively, the relative position between the first bracket 130 and the second bracket 230 is controlled, thereby achieving angle adjustment between the headrest section 100 and the backrest section 200. This structure is particularly simple and effectively reduces the number of components in the angle adjustment system 100.

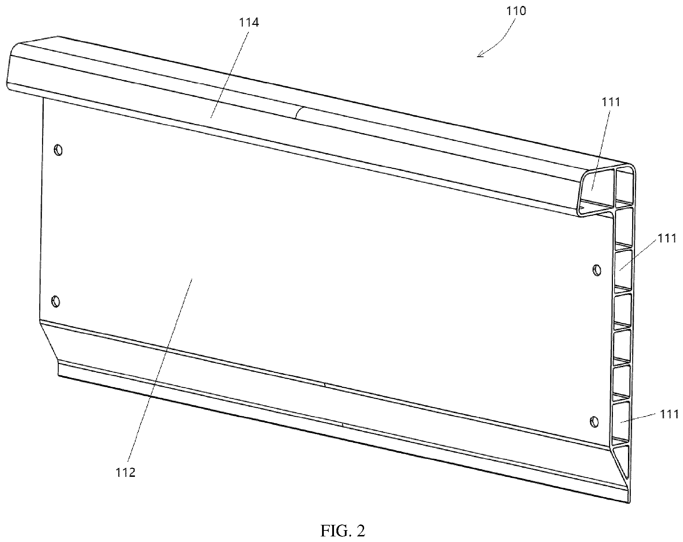

Below, concerning Figures 2 to 6, the detailed structure and connection methods of each component of the angle adjustment system 10 are further described.

Referring to Figure 2, in this embodiment, the headrest rear panel 110 has a substantially flat body 111 and a top portion 114 extending perpendicularly from the body 111. The body 111 and top portion 114 have a hollow configuration, forming multiple first accommodating sections 112 at both ends.

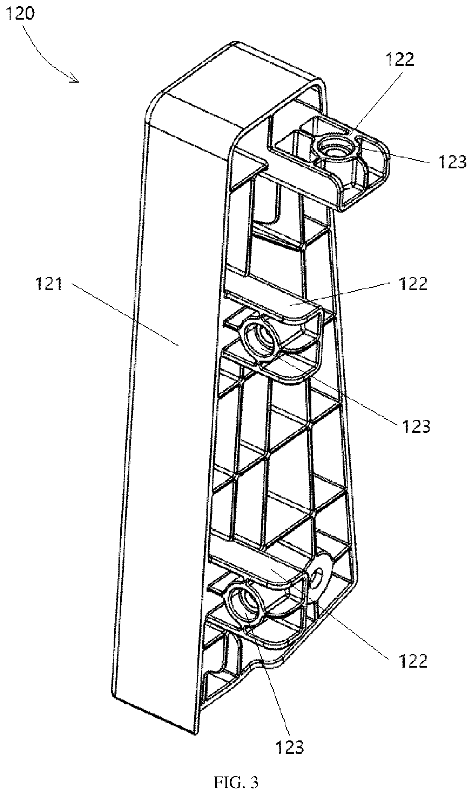

Referring to Figure 3, the headrest side plate 120 has a generally truncated conical body 121 and multiple protrusions 122 extending perpendicular to the plane of the body 121, each protrusion 122 is provided with recessed portion 123 to accommodate connection elements such as nuts.

Returning to Figure 1, as shown in Figure 3, the headrest side plates 120 in this embodiment are two in number, installed at both ends of the headrest rear panel 110. The numerous protrusions 122 of the headrest side plates 120 are inserted into the multiple first accommodating sections 112 of the headrest rear panel 110, causing the headrest side plates 120 to be installed approximately perpendicular to the body 111 of the headrest rear panel 110, and aligning the top of the headrest side plates 120 with the top portion 114 of the headrest rear panel 110.

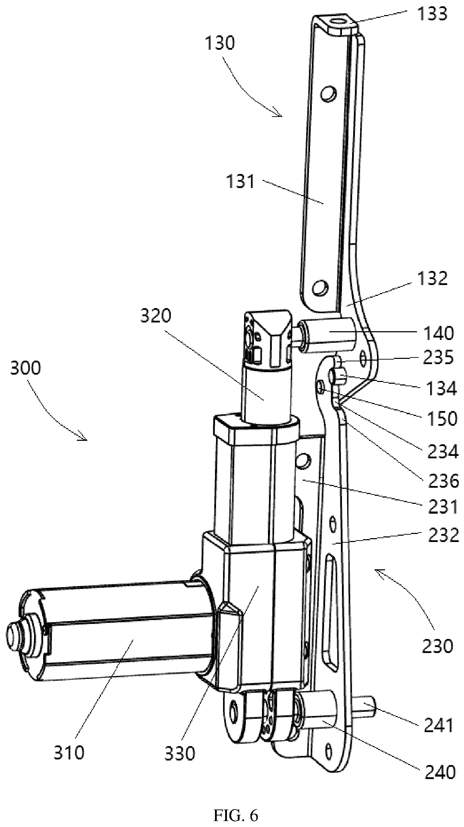

Referring to Figure 6, the first bracket 130 includes a first side part 131, a second side part 132, and a third side part 133. The first side part 131 is generally rectangular, the second side part 132 is connected at a right angle to the long side of the first side part 131, and the third side part 133 is connected at a right angle to the short side of the first side part 131.

Returning to Figure 1, the headrest rear panel 110, headrest side plates 120, and the first side part 131, second side part 132, and third side part 133 of the first bracket 130 are all provided with corresponding bolt holes, allowing the first bracket 130 to be bolted to the body 111 of the headrest rear panel 110 via the first side part 131, to the top portion 114 of the headrest rear panel 110 via the third side part 133, and to the headrest side plates 120 via the second side part 132.

According to the above connection relationships, the angle between the first side part 131 and the second side part 132 can be determined based on the angle between the headrest rear panel 110 and the headrest side plates 120. The angle between the first side part 131 and the third side part 133 can be determined based on the angle between the body 111 and the top portion 114 of the headrest rear panel 110.

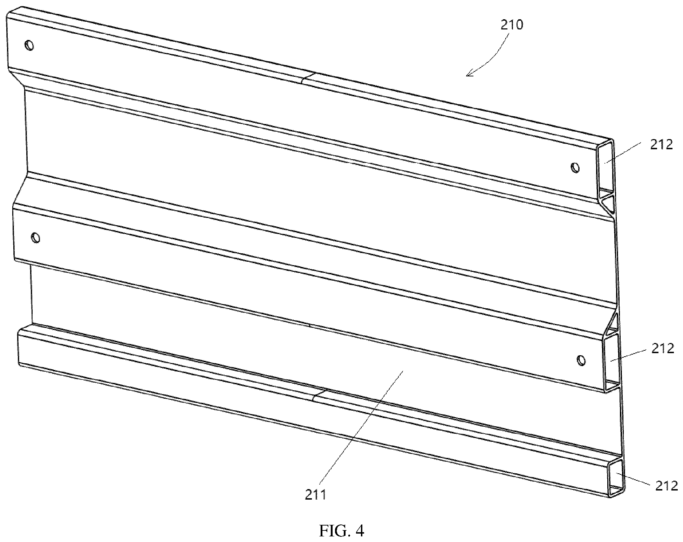

Referring to Figure 4, the backrest rear panel 210 has a generally flat body 211, which has a hollow configuration and forms multiple first accommodating sections 212 at both ends.

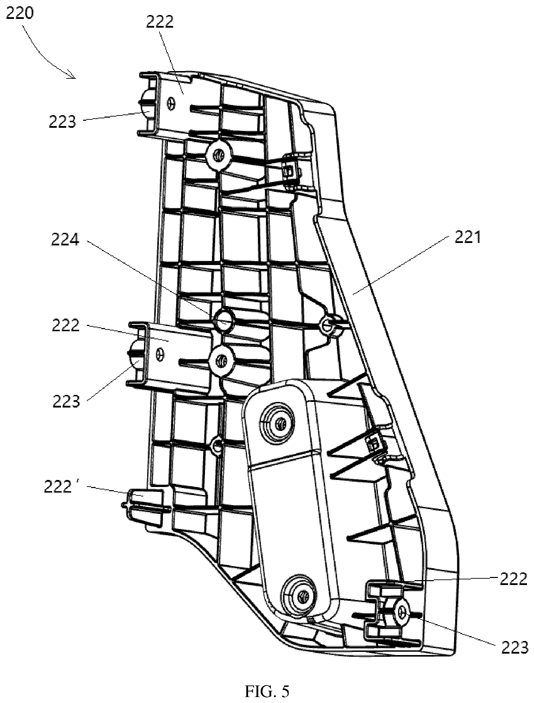

Referring to Figure 5, the backrest side plate 220 has a substantially truncated conical body 221 and multiple protrusions 222 and 222' extending perpendicular to the body 221, wherein each protrusion 222 is provided with recessed portion 223 for accommodating connection elements such as nuts, and the protruding part 222' is alternatively constructed as cross ribs.

Returning to Figure 1, as shown in Figure 5, the backrest side plates 220 in this embodiment are two in number, installed at both ends of the backrest rear panel 210. The multiple protrusions 222 and 222' of the backrest side plates 220 are inserted into the multiple first accommodating sections 212 of the backrest rear panel 210, causing the backrest side plates 220 to be installed approximately perpendicular to the body 211 of the backrest rear panel 210.

Referring to Figure 6, the second bracket 230 includes a fourth side part 231 and a fifth side part 232. The fourth side part 231 is generally rectangular, and the fifth side part 232 is connected at a right angle to the long side of the fourth side part 231.

Returning to Figure 1, the backrest rear panel 210, backrest side plates 220, and the fourth side part 231 and fifth side part 232 of the second bracket 230 are all provided with corresponding bolt holes, allowing the second bracket 230 to be bolted to the body 211 of the backrest rear panel 210 via the fourth side part 231 and to the backrest side plates 220 via the fifth side part 232.

According to the above connection relationships, the angle between the fourth side part 231 and the fifth side part 232 can be determined based on the angle between the backrest rear panel 210 and the backrest side plates 220.

Referring to Figure 6, the adjustment device 300 in this embodiment is constructed as a linear actuator, specifically an electric linear actuator, which includes a driver 310 constructed as a motor, a second adjustment part 330 fixedly connected to the driver 310, and a first adjustment part 320 capable of performing linear movement relative to the second adjustment part 330 under the drive of the driver 310. In addition, the adjustment device 300 can alternatively use devices such as hydraulic cylinders, pneumatic cylinders, or electric swing arms. Alternatively, the adjustment device 300 can be constructed as a manual device, comprising a first adjustment part and a second adjustment part, and manually causing the first adjustment part to move relative to the second adjustment part.

The first adjustment part 320 is pivotally connected to the second side part 132 of the first bracket 130 via the first shaft 140, and the second adjustment part 330 is pivotally connected to the fifth side part 232 of the second bracket 230 via the second shaft 240. The first bracket 130 and the second bracket 230 are pivotally connected via the pivot shaft 150. Thus, when the adjustment device 300 drives the first adjustment part 320 to move relative to the second adjustment part 330, the first bracket 130 pivots relative to the second bracket 230, thereby achieving the angle adjustment between the headrest section 100 and the backrest section 200.

The first shaft 140 can be integrally molded with the first bracket 130 and pivotally connected to the first adjustment part 320 via a bearing. The first shaft 140 can be integrally molded with the first bracket 130. The first shaft 140 can also be separately molded with the first bracket 130 and then fixed together using methods such as welding. The first shaft 140 can also be fixed to the first adjustment part 320 first and then pivotally connected to the first bracket 130 via a bearing.

Similarly, the second shaft 240 can be integrally molded with the second bracket 230 and pivotally connected to the second adjustment part 330 via a bearing. The first shaft 240 can be integrally molded with the second bracket 230. The second shaft 240 can also be separately molded with the second bracket 230 and then fixed together using methods such as welding. The second shaft 240 can also be fixed to the second adjustment part 330 first and then pivotally connected to the second bracket 230 via a bearing.

In addition, the second shaft 240 extends further on the side away from the adjustment device 300 and forms a sub-shaft 241, which can be housed and supported in the second accommodating section 224 of the backrest side plate 220. Thus, the adjustment device 300 applies the adjustment force to the second accommodating section 224 of the second bracket 230, which absorbs the force, reducing the shear force at the connection points between the second bracket 230 and the backrest rear panel 210 and backrest side plates 220, thereby minimizing the risk of connection damage.

The first shaft 140 can similarly form a sub-shaft and be housed and supported in the second accommodating section of the headrest side plate 120. In this embodiment, the force on the first bracket 130 is already introduced into the top portion 114 of the headrest rear panel 110 through the third side part 133.

Preferably, the first adjustment part 320 is connected to the lower part of the first bracket 130, and the second adjustment part 330 is connected to the lower part of the second bracket 230. Since the headrest side plate 120 and the backrest side plate 220 are progressively enlarged in a truncated conical shape from top to bottom, a larger space can be formed at the lower part after assembling with the rear panels 110 and 220. Placing the adjustment device 300 lower facilitates accommodating the adjustment device 300, preventing users from touching the adjustment device 300 while leaning, thereby avoiding adverse effects on seating comfort.

To limit the range of angle adjustment of the angle adjustment device 10, an arcuate guiding groove 234 centered at the pivot shaft 150 is provided on the second bracket 230. Both ends of the guiding groove 234 are provided with limiting parts 235 and 236, and a sliding member 134 that cooperates with the guiding groove 234 is provided on the first bracket 130. When the first bracket 130 pivots relative to the second bracket 230, the sliding member 134 can slide along the guiding groove 234 and stop sliding upon contacting either limiting part 235 or 236. Thus, by reasonably setting the positions of the limiting parts 235 and 236, the sliding range of the sliding member 134 can be limited, thereby restricting the angle adjustment range of the angle adjustment device 10. In addition, a guiding groove can be arranged on the first bracket 130 and a sliding member on the second bracket 230.

Preferably, the adjustment device 300 is arranged on only one side, thereby reducing the number of required connecting component. However, arranging the adjustment device 300 on only one side may cause unilateral collapse or deformation during use. Therefore, a tensioning component 400 can be placed on the other side. The tensioning component 400 is constructed as a spring, wherein one end of the spring is connected to the first shaft 140 on the first bracket 130, and the other end is connected to the second shaft 240 on the second bracket 230. This allows the tensioning force of the spring to prevent the occurrence of the aforementioned adverse situations.

Preferably, the headrest rear panel 110, headrest side plate 120, backrest rear panel 210, and backrest side plate 220 are plastic parts, particularly selected from wood molded parts, injection molded parts, blow molded parts, and extruded molded parts. On the one hand, the structures of the headrest rear panel 110, headrest side plate 120, backrest rear panel 210, and backrest side plate 220 are suitable for production using wood-molded parts, injection-molded parts, blow-molded parts, or extruded-molded parts. On the other hand, plastic parts can be molded in one step using molds during production and can subsequently be assembled automatically, thereby significantly reducing labor costs and production cycles while also meeting lightweight design requirements.

More preferably, the headrest rear panel 110 and backrest rear panel 210 are constructed as wood molded parts, and the headrest side plate 120 and backrest side plate 220 are constructed as injection molded parts. This is because wood molded parts are relatively cost-effective, while injection molded parts have relatively high strength and are suitable for forming the second accommodating section 224 for load-bearing.

### List of Reference Symbols

- 10: Angle adjustment system
- 100: Headrest section
- 110: Headrest rear panel
- 111: Body of headrest rear panel
- 112: First accommodating section of headrest rear panel
- 114: Top of headrest rear panel
- 120: Headrest side plate
- 121: Body of headrest side plate
- 122: Protrusion of headrest side plate
- 123: Recessed portion of headrest side plate
- 130: First bracket
- 131: First side part
- 132: Second side part
- 133: Third side part
- 134: Sliding member
- 140: First shaft
- 150: Pivot shaft
- 200: Backrest section
- 210: Backrest rear panel
- 211: Body of backrest rear panel
- 212: First accommodating section of backrest rear panel
- 220: Backrest side plate
- 221: Body of backrest side plate
- 222: Protrusion of backrest side plate
- 223: Recessed portion of backrest side plate
- 224: Second accommodating section
- 230: Second bracket
- 231: Fourth side part
- 232: Fifth side part
- 234: Guiding groove
- 235: Limiting part
- 236: Limiting part
- 240: Second shaft
- 300: Adjustment device
- 310: Driver
- 320: First adjustment part
- 330: Second adjustment part
- 400: Tensioning component

## Claims

1. An angle adjustment system, wherein in that the angle adjustment system comprises:
A headrest section, the headrest section having a headrest rear panel, headrest side plates connected to the ends of the headrest rear panel, and a first bracket connecting the headrest rear panel and headrest side plates;
A backrest section, the backrest section having a backrest rear panel, backrest side plates connected to the ends of the backrest rear panel, and a second bracket connecting the backrest rear panel and backrest side plates; and
An adjustment device, the adjustment device has a first adjustment part and a second adjustment part, wherein the first adjustment part can move relative to the second adjustment part,
Wherein the first adjustment part is connected to the first bracket, the second adjustment part is connected to the second bracket, and the first bracket and the second bracket are connected via a pivot shaft. When the first adjustment part moves relative to the second adjustment part, the first bracket pivots relative to the second bracket.

2. The angle adjustment system according to claim 1, wherein in that the first bracket has a first side part and a second side part arranged at an angle to each other, the first bracket connects to the headrest rear panel via the first side part, and the first bracket connects to the headrest side plate via the second side part; and/or, the second bracket has a fourth side part and a fifth side part arranged at an angle to each other, the second bracket connects to the backrest rear panel via the fourth side part, and the second bracket connects to the backrest side plate via the fifth side part.

3. The angle adjustment system according to claim 2, wherein in that the headrest rear panel has a substantially flat body and a top portion extending perpendicularly from the body, the first bracket has a third side part arranged at an angle to the first side part, and the first bracket connects to the body of the headrest rear panel via the third side part.

4. The angle adjustment system according to claim 1, wherein in that the headrest rear panel and/or the backrest rear panel are provided with first accommodating sections, and the headrest side plate and/or the backrest side plate have protrusions extending perpendicular to the plane of the side plates, wherein the protrusions are inserted into the first accommodating sections to interlock the headrest side plate and/or the backrest side plate to both ends of the headrest rear panel and/or the backrest rear panel.

5. The angle adjustment system, according to claim 4, wherein in that the protrusions are provided with a recessed portion, and nuts are provided within the recessed portion. The first bracket and/or the second bracket are connected to the nuts in the recessed portion of the protrusions via bolts; or the protrusions are constructed as cross ribs.

6. The angle adjustment system, according to claim 1, wherein in that the adjustment device includes a driver that can drive the first adjustment part to move relative to the second adjustment part.

7. The angle adjustment system, according to claim 6, wherein in that the adjustment device is a linear actuator, the driver can drive the first adjustment part to perform linear motion relative to the second adjustment part, and the first adjustment part is pivotally connected to the first bracket via a first shaft, and the second adjustment part is pivotally connected to the second bracket via a second shaft.

8. The angle adjustment system, according to claim 7, wherein in that the first shaft is fixedly connected to the first bracket and pivotally connected to the first adjustment part via a bearing; and the second shaft is fixedly connected to the second bracket and pivotally connected to the second adjustment part via another bearing.

9. The angle adjustment system, according to claim 7, wherein in that the first shaft is fixedly connected to the first adjustment part and pivotally connected to the first bracket via a bearing; and the second shaft is fixedly connected to the second adjustment part and pivotally connected to the second bracket via another bearing.

10. The angle adjustment system, according to claim 7, wherein in that the headrest side plates and/or the backrest side plates are provided with second accommodating sections that house and support the first shaft and/or the second shaft.

11. The angle adjustment system, according to claim 1, wherein in that the first bracket and the second bracket is provided with a guiding groove, both ends of the guiding groove are provided with limiting parts, and the other of the first bracket and the second bracket is provided with a sliding member that cooperates with the guiding groove. When the first bracket pivots relative to the second bracket, the sliding member slides along the guiding groove and stops sliding upon contacting either limiting parts.

12. The angle adjustment system, according to claim 1, wherein in that the headrest rear panel is connected to two headrest side plates via two first brackets at both ends, and the backrest rear panel is connected to two backrest side plates via two second brackets at both ends, wherein the adjustment device is arranged at one end, and tensioning components connected to the first bracket and the second bracket are arranged at the other end.

13. The angle adjustment system, according to claim 1, wherein in that the headrest rear panel, headrest side plate, backrest rear panel, and backrest side plate are plastic parts.

14. The angle adjustment system, according to claim 13, wherein in that the headrest rear panel, headrest side plate, backrest rear panel, and backrest side plate are selected from wood-molded parts, injection-molded parts, blow-molded parts, and extruded-molded parts.

15. The angle adjustment system, according to claim 14, wherein in that the headrest rear panel and backrest rear panel are constructed as wood-molded parts, and the headrest side plate and backrest side plate are constructed as injection-molded parts.
